# EUROPEAN PATENT APPLICATION

(11) **EP 2 750 095 A1**
(43) Date of publication of application: **02.07.2014**
(21) Application number: 13275092.8
(22) Date of filing: 18.04.2013
(51) Int. Cl.: G06Q 30/06

(54) **Electronic shelf label system and method of operating the same**

(30) Priority: 28.12.2012 KR 20120157024
(71) Applicant: Samsung Electro-Mechanics Co., Ltd, Suwon, Gyunggi-Do (KR)
(72) Inventor: Yoon, Dae Gil, Gyunggi-do (KR); Lee, Chung Hee, Gyunggi-do (KR)
(74) Representative: Potter Clarkson LLP

(57) **Abstract**

There is provided a method of operating an electronic shelf label system performed by a gateway providing update data provided from an electronic shelf label server to a plurality of electronic shelf label tags through wireless communications, the method including, determining a tag group to which the update data is to be transmitted, transmitting a price update multi-poll (PUMP) frame including link schedule information and tag identification information regarding the tag group, and transmitting a block data frame including the update data on the tag group when a response message is received from at least one electronic shelf label tag belonging to the tag group, wherein the tag group includes the at least one electronic shelf label tag among the plurality of electronic shelf label tags.

## Description

### CROSS-REFERENCE TO RELATED APPLICATIONS

This application claims the priority of Korean Patent Application No. 10-2012-0157024 filed on December 28, 2012, in the Korean Intellectual Property Office, the disclosure of which is incorporated herein by reference.

### BACKGROUND OF THE INVENTION

### Field of the Invention

The present invention relates to an electronic shelf label system and a method of operating the same.

### Description of the Related Art

In accordance with the development of tag technology and local area wireless communications, various systems based on tags have been provided. As one system based on tags, there is provided an electronic shelf label system, which has been variously used in environments such as hypermarkets, or the like, providing various products at any time.

The electronic shelf label system includes a gateway wirelessly providing update data provided from a server and an electronic shelf label tag displaying product information, or the like, based on the update data provided from the gateway. Here, the gateway and the electronic shelf label tag may transmit the update data through wireless communications.

In addition, since the electronic shelf label tag is operated based on embedded power, it is required to carefully manage power. To this end, the electronic shelf label tag is maintained in a sleep state for a predetermined period and is then changed to be in a wakeup state when necessary to receive the update data. To this end, the gateway transmits a wakeup message at a predetermined time interval, and the electronic shelf label tag determines whether it performs an update process based on the wakeup message received in the wakeup state.

Therefore, the electronic shelf label system requires at least two different wireless communications channels. That is, the electronic shelf label system requires a wakeup channel for periodically transmitting and receiving the wakeup message and a data channel for transmitting and receiving the update data. The wakeup channel and the data channel are used as separate channels as there is a risk that a collision may occur between the wakeup message and the update message in the case of using one wireless channel.

Particularly, in the wakeup channel, in the case in which a plurality of gateways are present, a scheme in which the respective gateways use different frequency bands, has been used in order to avoid a collision.

Therefore, there is a limitation that at least two separate wireless communications channels are required in the electronic shelf label system installed in a limited space.

In addition, a large amount of a wireless frequency band is consumed, the gateway and the electronic shelf label tag should separately include a wireless communications module for a wakeup channel and a wireless communications module for a data channel, and instability of wireless communications occurs in the electronic shelf label tag that is present in a region outside of a communications range by adjusting the communications range in order to avoid interference between frequencies.

The following Related Art Documents, which relate to the above-mentioned related art, do not disclose a solution to the limitations described above.

### [Related Art Document]

(Patent Document 1) Korean Patent Laid-Open Publication No. 2012-0109050
(Patent Document 2) Korean Patent Laid-Open Publication No. 2010-0068160

### SUMMARY OF THE INVENTION

An aspect of the present invention provides an electronic shelf label system capable of stably managing an update of an electronic shelf label tag even in a single wireless communications channel using a price update multi-poll (PUMP) frame, and a method of operating the same.

According to an aspect of the present invention, there is provided a method of operating an electronic shelf label system performed by a gateway providing update data provided from an electronic shelf label server to a plurality of electronic shelf label tags through wireless communications, the method including: determining a tag group to which the update data is to be transmitted; transmitting a price update multi-poll (PUMP) frame including link schedule information and tag identification information regarding the tag group; and transmitting a block data frame including the update data on the tag group when a response message is received from at least one electronic shelf label tag belonging to the tag group, wherein the tag group includes the at least one electronic shelf label tag among the plurality of electronic shelf label tags.

The tag identification information may include: group information indicating that the plurality of electronic shelf label tags are classified as being at least one group; and sub-group information indicating that the at least one group is classified as having at least one sub-group.

The method may further include allocating the group information and the sub-group information to the plurality of electronic shelf label tags.

The transmitting of the PUMP frame may include: determining an uplink time or a downlink time for the at least one sub-group included in the tag group to generate the link schedule information; and generating a PUMP message including group identification information regarding the tag group and the sub-group and the link schedule information.

The determining of the tag group may include: identifying a first group or a first sub-group allocated to the at least one electronic shelf label tag transmitting the response message to the PUMP frame; and determining whether the identified first group or first sub-group corresponds to a group and a sub-group included in the link scheduling information.

The transmitting of the block data frame may include integrating the update data on at least one electronic shelf label tag belonging to the first sub-group when the at least one electronic shelf label tag suitably transmits the response message, thereby generating the block message frame.

According to another aspect of the present invention, there is provided a method of operating an electronic shelf label system performed by electronic shelf label tags matched with a gateway in a ratio of 1 to N and updating update data from the gateway through wireless communications, the method including: receiving a PUMP frame including link schedule information and tag identification information from the gateway; transmitting a response message to a PUMP message in an uplink time allocated to the electronic shelf label tags using the tag identification information and the link schedule information; and identifying update data of the electronic shelf label tags in a received block data frame when the block data frame is received from the gateway, thereby performing an update.

The tag identification information may include: group information indicating that a plurality of electronic shelf label tags are classified as being at least one group; and sub-group information indicating that the at least one group is classified as having at least one sub-group.

The transmitting of the response message may include: determining the uplink time allocated to a group or a sub-group to which the electronic shelf label tags belong; and transmitting the response message to the PUMP message when a current time is included in the uplink time.

The transmitting of the response message may further include: maintaining the electronic shelf label tags in a sleep state for a remaining time until the uplink time when the current time is not included in the uplink time; and transmitting the response message to the PUMP message when the sleep state ends.

According to another aspect of the present invention, there is provided an electronic shelf label system including: a gateway providing update data provided from an electronic shelf label server to a plurality of electronic shelf label tags; and the plurality of electronic shelf label tags, wherein the gateway transmits a PUMP frame including link schedule information and tag identification information to the plurality of electronic shelf label tags and transmits a block data frame in which the update data of one electronic shelf label tag transmitting a response frame to the PUMP frame is grouped, and the plurality of electronic shelf label tags receive the PUMP frame and then transmit the response frame in uplink times allocated thereto, and identify their update data when they receive the block data frame, thereby performing an update.

The gateway may transmit the PUMP frame and the block data frame to the plurality of electronic shelf label tags using one wireless communications channel.

The tag identification information may include: group information indicating that the plurality of electronic shelf label tags are classified as being at least one group; and sub-group information indicating that the at least one group is classified as having at least one sub-group, wherein the link schedule information includes an uplink time or a downlink time determined for each sub-group.

The gateway may include: an update data storage unit storing the update data on the plurality of electronic shelf label tags; a PUMP management unit generating the PUMP frame including the link schedule information and the tag identification information for each group or sub-group of the electronic shelf label tags; and a block data frame generation unit integrating the update data for each group of the electronic shelf label tags to generate the block data frame.

Each of the electronic shelf label tags may include: a tag control unit determining the uplink time allocated to the electronic shelf label tag using the PUMP frame and controlling the response message to the PUMP frame to be transmitted in the determined uplink time; and an update management unit identifying the update data of the electronic shelf label tag in the block data frame using the group information or the sub-group information to perform an update.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a configuration diagram for explaining an example of an electronic shelf label system according to an embodiment of the present invention;
FIG. 2 is a configuration diagram for explaining an electronic shelf label server according to the embodiment of the present invention;
FIG. 3 is a configuration diagram for explaining a gateway according to the embodiment of the present invention;
FIG. 4 is a configuration diagram for explaining an electronic shelf label tag according to the embodiment of the present invention;
FIG. 5 is a reference diagram showing a communications process between the gateway and the electronic shelf label tag in a time series scheme;
FIG. 6 is a reference diagram showing an example of a price update multi-poll (PUMP) frame according to the embodiment of the present invention;
FIG. 7 is a schematic flow chart for explaining a method of operating an electronic shelf label system according to an embodiment of the present invention;
FIG. 8 is a schematic flow chart for explaining a method of operating an electronic shelf label system performed by the gateway according to the embodiment of the present invention; and
FIG. 9 is a schematic flow chart for explaining a method of operating an electronic shelf label system performed by the electronic shelf label tag according to the embodiment of the present invention.

### DETAILED DESCRIPTION OF THE EMBODIMENTS

Hereinafter, embodiments of the present invention will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions of elements may be exaggerated for clarity, and the same reference numerals will be used throughout to designate the same or like elements.

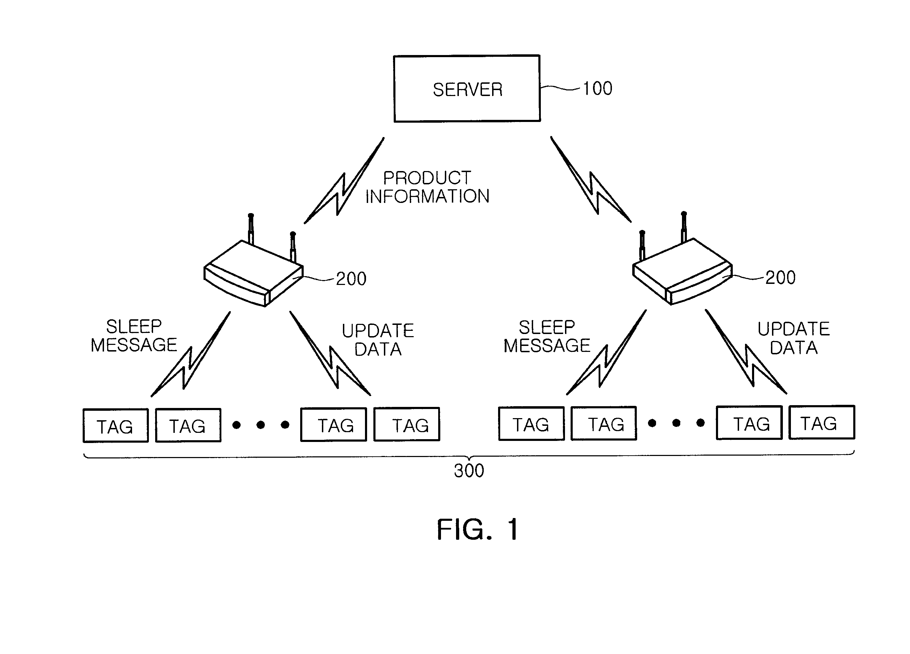

FIG. 1 is a configuration diagram for explaining an example of an electronic shelf label system according to an embodiment of the present invention.

Referring to FIG. 1, the electronic shelf label system according to the embodiment of the present invention may include an electronic shelf label server 100, at least one gateway 200, and a plurality of electronic shelf label tags 300.

In the embodiment of the present invention, the gateway 200 may have a relationship of 1:N (N indicates a natural number larger than 2) with respect to the plurality of electronic shelf label tags 300. Therefore, one gateway 200 may provide a price update multi-poll (PUMP) frame as described below to the plurality of electronic shelf label tags 300 to provide update data.

In addition, the gateway 200 and the plurality of electronic shelf label tags 300 associated therewith may only use one wireless communications channel. That is, according to the related art, at least one wakeup channel and one data channel have been required; however, according to the embodiment of the present invention, wakeup management of the electronic shelf label tags 300 and transmission of the update data may be performed using one wireless communications channel.

The electronic shelf label server 100 may manage the electronic shelf label system overall.

The electronic shelf label sever 100 may provide product information to the electronic shelf label tags 300 using at least one gateway 200. The electronic shelf label server 100 and at least one gateway 200 may be connected to each other in a wired or wireless scheme.

The gateway 200 may transmit the update data to the plurality of electronic shelf label tags 300 managed by the gateway 200. In addition, the gateway 200 may perform the wakeup management of the electronic shelf label tags 300 using the PUMP frame.

The electronic shelf label tags 300 may receive the update data from the gateway 200 and display the update data. For example, the electronic shelf label tags 300 may display information (detailed product information, price information, or the like) on specific products.

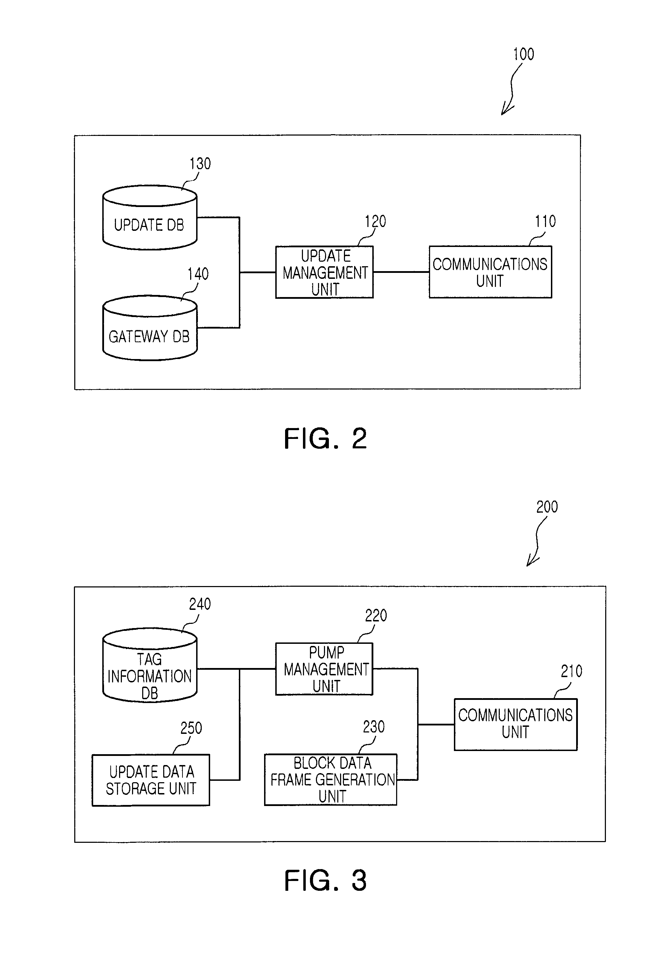

The electronic shelf label server 100, the at least one gateway 200, and the electronic shelf label tags 300 that configure the above-mentioned electronic shelf label system will be described in more detail below with reference to FIGS. 2 to 9.

FIG. 2 is a configuration diagram for explaining an electronic shelf label server according to the embodiment of the present invention.

Referring to FIG. 2, the electronic shelf label server 100 may include a communications unit 110, an update management unit 120, an update database 130, and a gateway database 140.

The communications unit 110 may set communications connection with the gateway 200 using wired or wireless communications.

The update management unit 120 may provide the update data to the gateway 200. For example, in the case in which update data to be provided to an electronic shelf label tag A is present, the electronic shelf label server 100 may provide the corresponding update data to a gateway A' managing the electronic shelf label tag A.

To this end, the electronic shelf label server 100 may include the gateway database 140 storing a relationship between the gateway and the electronic shelf label tags managed by the gateway and the update database 130 storing the update data.

In the embodiment of the present invention, the update management unit 120 may update the update database 130 using product information provided from the outside. To this end, the electronic shelf label server 100 may have a predetermined external input interface for receiving the product information from the outside.

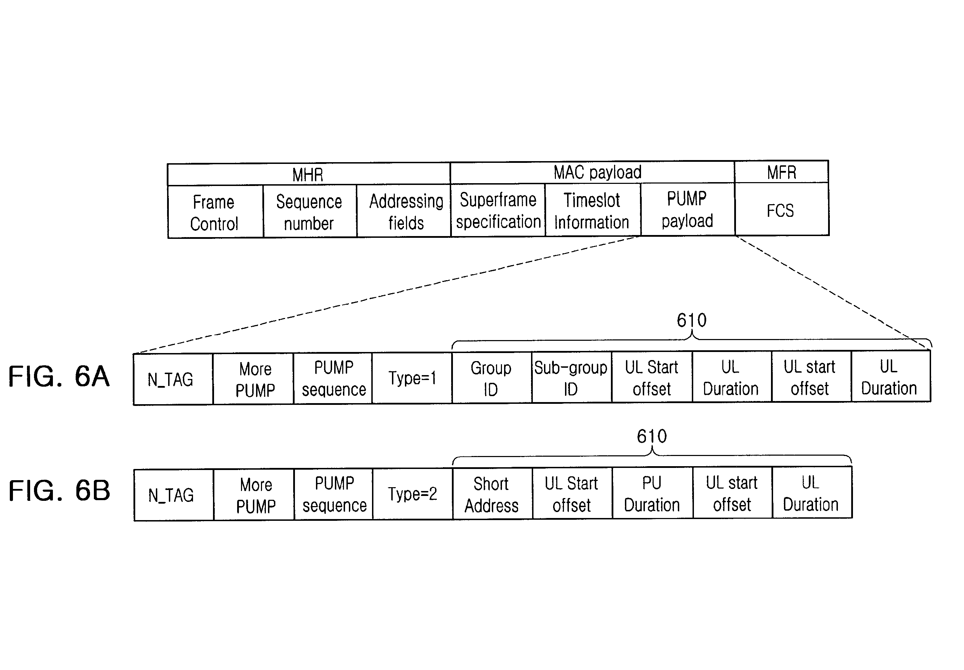

FIG. 3 is a configuration diagram for explaining a gateway according to the embodiment of the present invention; and FIG. 6 is a reference diagram showing an example of a price update multi-poll (PUMP) frame according to the embodiment of the present invention.

Hereinafter, the gateway 200 according to the embodiment of the present invention will be described with reference to FIGS. 3 and 6.

First referring to FIG. 3, the gateway 200 may include a communications unit 210, a PUMP management unit 220, a block data frame generation unit 230, a tag information database 240, and an update data storage unit 250.

The communications unit 210 may set communications connection with the electronic shelf label server 100 or the electronic shelf label tags 300.

In the embodiment of the present invention, the communications unit 210 may include a first communications module for communications with the electronic shelf label server 100and a second communications module for communications with the electronic shelf label tags 300. Here, the second communications module may include a single wireless communications module. That is, according to the related art, since the wakeup channel and the data channel are used separately, the second communications module needs to include a plurality of wireless communications modules for different frequency bands; however, according to the embodiment of the present invention, since one wireless communications channel is used, the second communications module may include one wireless communications module.

The PUMP management unit 220 may generate the PUMP frame and provide the generated PUMP frame to the plurality of electronic shelf label tags managed by the gateway.

More specifically, the PUMP management unit 220 may classify the plurality of electronic shelf label tags managed by the gateway as a predetermined group and a sub-group and manage the groups, and the PUMP management unit 220 may transmit the PUMP frame to the predetermined group and the sub-group as reception targets. Here, the PUMP frame may include link schedule information and tag identification information.

Hereinafter, the PUMP frame will be described in more detail with reference to FIG. 6. In FIG. 6, an example in which the PUMP frame is formed as a beacon frame of Zigbee standard (802.15.4) is shown. The PUMP frame stores PUMP related information using a PUMP payload field.

However, the PUMP frame may also be configured according to another standard in which the PUMP payload field is applied in another embodiment of the present invention.

In (a) and (b), the PUMP payload fields are shown by way of example and have an N_TAG field, a More PUMP field, and a PUMP Sequence field in common. In addition, (a) is an example of configuring the PUMP payload using a group ID and a sub-group ID, and (b) is an example of configuring the PUMP payload using a unique address, that is, a Short address of the electronic shelf label tag.

The N_TAG field indicates the number of electronic shelf label tags managed with a current PUMP frame, and the More PUMP field indicates whether or not the PUMP frame having the same PUMP sequence after the current PUMP frame is generated. In addition, the PUMP Sequence field means a unique identifier of the PUMP frame.

As an example of the PUMP payload field, (a) is an example of configuring the PUMP payload using the group ID (Group IP) and the sub-group ID (Sub-Group ID).

A Type field indicates a type of PUMP frame and has a detailed value divided as shown in the following Table 1. Therefore, it may be appreciated that in the case of (a), since the PUMP frame is provided for each group, the Type field has a value of 1, and in the case of (b), since the PUMP frame is provided using a Short Address for each of the electronic shelf label tags, the Type field has a value of 2.

**[Table 1]**

| Type field | Value |
|---|---|
| Group ID | 1 |
| Short Address | 2 |

In the embodiment of the present invention, the gateway 200 may classify the plurality of electronic shelf label tags 300 managed by the gateway 200 as being at least one group and manage the group, and the gateway 200 may classify each group as having at least one sub-group and manage the group. To this end, the PUMP frame may include tag identification information including group information and sub-group information. Therefore, in the example of FIG. 6, a Group ID field may correspond to the group information, and a Sub-group ID field may correspond to the sub-group information.

The Group ID field indicates a unique identifier of a group configured of the electronic shelf label tags receiving the PUMP frame, and the Sub-Group ID field indicates a unique identifier of sub-groups belonging to the group.

In the embodiment of the present invention, the tag identification information may further include unique identification information allocated to the respective electronic shelf label tags, which may be represented as a Short Address field in the example of FIG. 6.

The Short Address field indicates unique addresses individually allocated to the electronic shelf label tags 300.

In addition, as described above, the PUMP frame may include schedule information regarding an uplink and a downlink. Here, the uplink means a link through which the electronic shelf label tag 300 transmits a response message to the PUMP frame to the gateway 200, and the downlink means a link through which the gateway 200 provides a block data frame including the update data to the electronic shelf label tag 300.

A UL Start Offset field indicates a remaining time (offset) until a time at which the electronic shelf label tag performs the uplink, and a UL Duration field indicates a duration of the uplink. Therefore, the electronic shelf label tag 300 may determine a start time of the uplink using the UL Start Offset field and determine the duration of the uplink using the UL Duration field.

A DL Start Offset field indicates a remaining time (offset) until a time at which the electronic shelf label tag performs the downlink, and a DL Duration field indicates a duration of the downlink.

Although one tag identification information and link schedule information 610 and 620 are included in the PUMP frame in the example shown in FIG. 6, a plurality of pieces of tag identification information and a plurality of pieces of link schedule information 610 and 620 may be included in one PUMP frame according to another embodiment of the present invention. Therefore, after one PUMP frame is transmitted, a plurality of block data frames may be provided.

Again referring to FIG. 3, the PUMP management unit 220 may determine a tag group to which the update data is to be transmitted, generate the PUMP frame including the link schedule information and the tag identification information, and transmit the PUMP frame to the determined tag group.

In the embodiment of the present invention, the PUMP management unit 220 may allocate the group information and the sub-group information to the plurality of electronic shelf label tags managed by the gateway.

In the embodiment of the present invention, the PUMP management unit 220 may determine an uplink time or a downlink time for at least one sub-group belonging to the tag group to generate the link schedule information. Therefore, the PUMP management unit 220 may generate a PUMP message including identification information regarding the tag group, group identification information regarding the sub-group, and link schedule information.

The block data frame generation unit 230 may integrate the update data on each group of the electronic shelf label tags to generate a block data frame.

More specifically, when a response message to the PUMP frame is received from at least one electronic shelf label tag belonging to the tag group receiving the PUMP frame, the block data frame generation unit 230 may transmit the block data frame including the update data on the tag group. Therefore, the block data frame may be one data frame including the update data on at least one electronic shelf label tag configuring the group or the sub-group.

In the embodiment of the present invention, the block data frame generation unit 230 may verify at least one electronic shelf label tag transmitting the response message to the PUMP frame. More specifically, the block data frame generation unit 230 may identify a group or a sub-group of at least one electronic shelf label tag transmitting the response message to the PUMP frame and determine whether the identified group or sub-group corresponds to a group or a sub-group included in the link schedule information. Then, when it is determined that the response message is suitably transmitted, the block data frame generation unit 230 may integrate the update data on at least one electronic shelf label tag belonging to the corresponding sub-group to generate the block message frame.

The tag information database 240 may store information regarding at least one electronic shelf label tag 300 managed by the gateway 200. For example, the tag information database may store at least one of the group information, the sub-group information, and the Short Address information regarding the electronic shelf label tags as described above.

The update data storage unit 250 may store the update data provided from the electronic shelf label server 100. The update data storage unit 250 may store the update data for each electronic shelf label tag. Therefore, the block data frame generation unit 230 may identify the electronic shelf label tags belonging to a tag group (or a tag sub-group) on which the update is performed and integrate the update data on the identified electronic shelf label tags from the update data storage unit 250 to generate the block data frame.

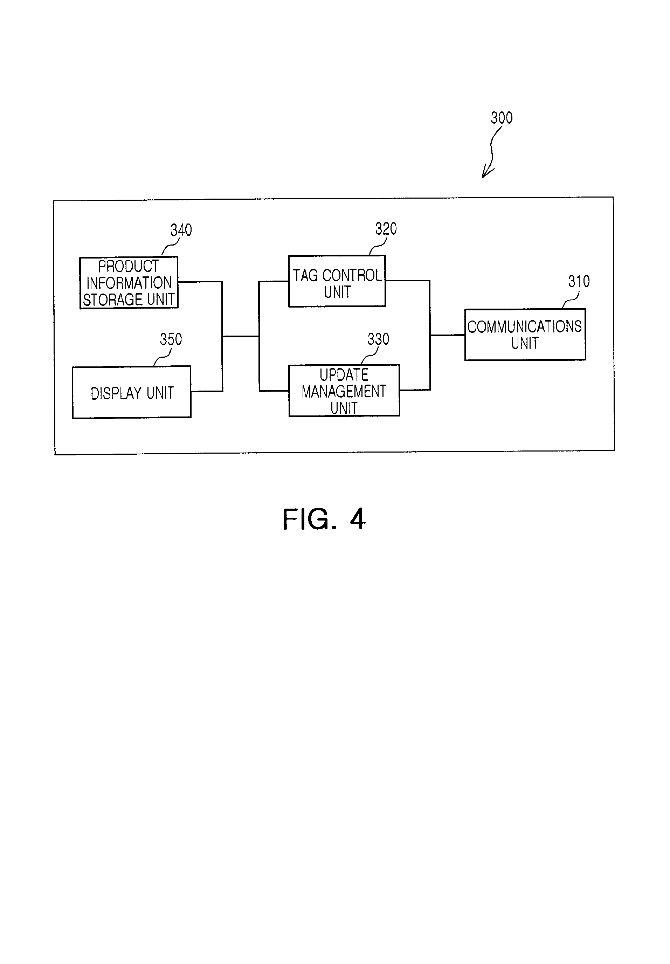

FIG. 4 is a configuration diagram for explaining an electronic shelf label tag according to the embodiment of the present invention.

Referring to FIG. 4, the electronic shelf label tag 300 may include a communications unit 310, a tag control unit 320, an update management unit 330, a product information storage unit 340, and a display unit 350.

The communications unit 310 may form a wireless communications environment with the gateway 200. The communications unit 310 may perform wireless communications with the communications unit 210 of the gateway using one wireless communications channel.

The tag control unit 320 may control other components of the electronic shelf label tag 300 to drive the electronic shelf label tag 300. In the embodiment of the present invention, the tag control unit 320 may control production information stored in the product information storage unit 340 to be displayed to the outside through the display unit 350.

In the embodiment of the present invention, the tag control unit 320 may interlock with the gateway 200 to thereby be allocated a group or a sub-group of the electronic shelf label tag.

The update management unit 330 may receive the PUMP frame from the gateway 200 and transmit the response message to the PUMP message in an uplink time allocated to the electronic shelf label tag using the tag identification information and the link schedule information included in the PUMP frame.

In the embodiment of the present invention, the update management unit 330 may determine an uplink time allocated to a group or a sub-group to which the electronic shelf label tag belongs and transmit the response message to the PUMP message when a current time is not included in the uplink time.

As an example of FIG. 6, the update management unit 330 may determine whether a group identifier and a sub-group identifier allocated to the electronic shelf label tag are the same as contents stated in the Group ID field and the Sub-group ID of the PUMP frame to determine an uplink or downlink time of the electronic shelf label tag.

In the embodiment of the present invention, the update controlling unit 340 may manage a sleep state of the electronic shelf label tag 300.

For example, the update management unit 330 may maintain the electronic shelf label tag 300 to be in the sleep state for a remaining time until the uplink time when the current time is not included in the uplink time of the electronic shelf label tag and transmit the response message to the PUMP message when the sleep state ends.

As another example, the update management unit 330 may determine a time at which the PUMP frame is transmitted and set the electronic shelf label tag 300 to be in the sleep state until a corresponding time has elapsed.

When the block data frame is received from the gateway 200, the update management unit 330 may identify the update data of the electronic shelf label tag 300 from the received block data frame to perform the update. More specifically, when the block data frame is received through the downlink, the update management unit 330 may identify the update data of the electronic shelf label tag in the received the block data frame and store the identified update data in the product information storage unit 340. Then, the update management unit may inform the tag control unit 320 that the update has been completed to thereby allow the tag control unit 320 to display the update data.

The product information storage unit 340 may store the update data provided from the update management unit 330.

The display unit 350 may display contents corresponding to data stored in the product information storage unit 340 to the outside. Since the display unit 350 may be implemented by various display means such as a light emitting diode (LED), a liquid crystal display (LCD), and the like, it is not limited to a specific means.

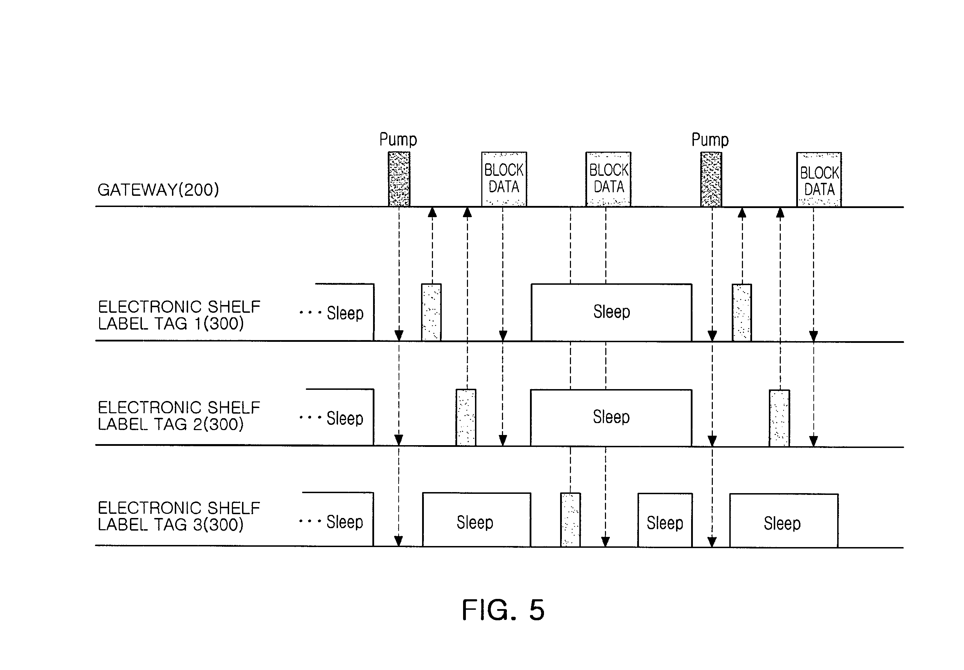

FIG. 5 is a reference diagram showing a communications process between the gateway and the electronic shelf label tag in a time series scheme. Here, first to third electronic shelf label tags may belong to the same group, the first and second electronic shelf label tags may belong to a first sub-group, and the third electronic shelf label tag may belong to a second sub-group.

As shown in FIG. 5, the gateway 200 may provide the PUMP frame to the plurality of electronic shelf label tags 300 managed by the gateway 200.

The first and second electronic shelf label tags 300 may determine that the uplink is possible in the group and the first sub-group to which they belong and transmit the response message to the PUMP frame.

On the other hand, it may be appreciated that the third electronic shelf label tag 300 calculates an uplink time of the second sub-group to which it is included and is set to be in a sleep state until the calculated uplink time has elapsed.

When the gateway 200 receives response messages from the first and second electronic shelf label tags 300, it may generate a block data frame including the update data on the first and second electronic shelf label tags 300 and provide the generated block data frame to the first and second electronic shelf label tags 300.

The first and second electronic shelf label tags 300 may identify their update data in the received block data frame to perform the update. When the update is completed, the first and second electronic shelf label tags 300 may be set to be in the sleep state until a time for receiving the next PUMP frame.

Meanwhile, the third electronic shelf label tag 300 may be changed into a wakeup state at an uplink time and provide a response message.

When the gateway 200 receives the response message from the third electronic shelf label tag 300, it may generate a block data frame including the update data on the third electronic shelf label tag 300 and provide the generated block data frame to the third electronic shelf label tag 300.

The third electronic shelf label tag 300 may perform the update using the block data frame and be set to be in the sleep state until a time at which the next PUMP frame is provided.

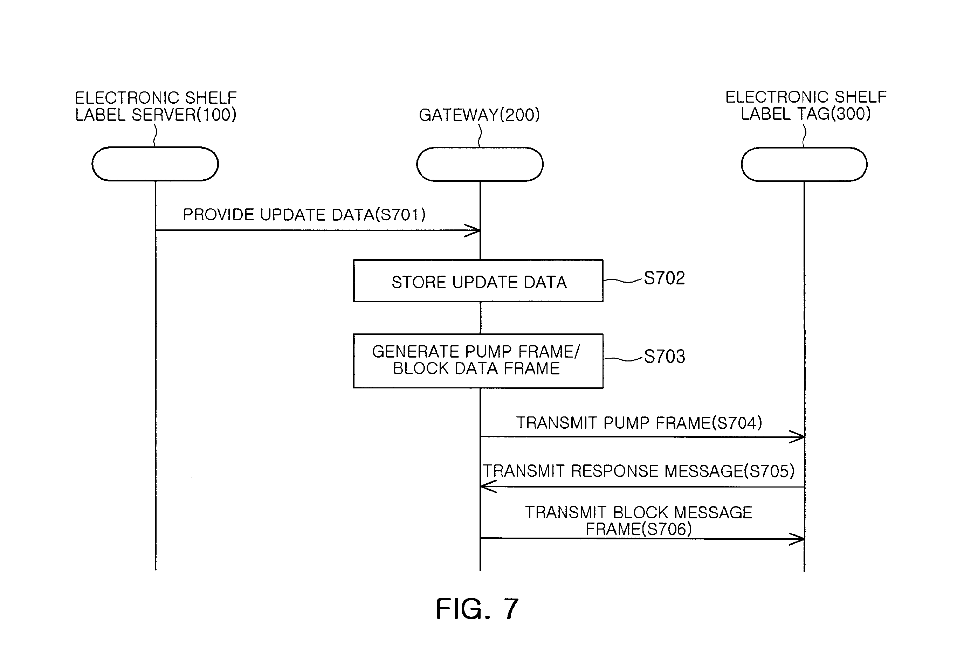

FIG. 7 is a schematic flow chart for explaining a method of operating an electronic shelf label system according to an embodiment of the present invention.

Referring to FIG. 7, when update data on the electronic shelf label tag 300 is present, the electronic shelf label server 100 may provide the update data to the gateway 200 managing the corresponding electronic shelf label tag 300 (S701).

The gateway 200 may store the update data provided from the electronic shelf label server 100 (S702) and generate the PUMP frame or the block data frame for the electronic shelf label tag 300 managed by the gateway 200 (S703).

The gateway 200 may provide the generated PUMP frame to the electronic shelf label tag 300 (S704) and transmit the block message frame for the corresponding electronic shelf label tag (S706) when it receives a response message to the PUMP frame (S705).

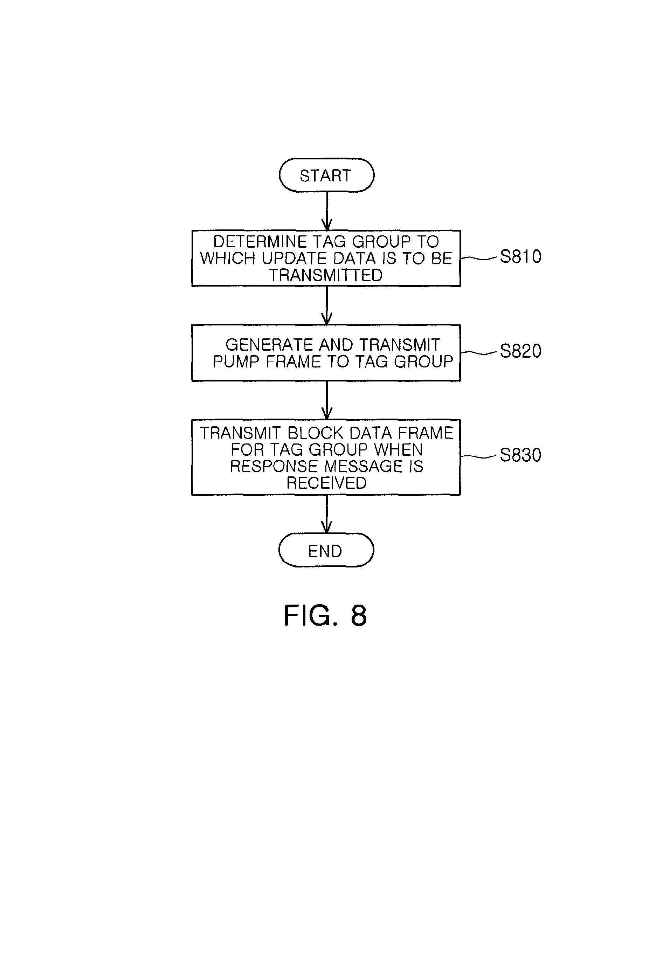

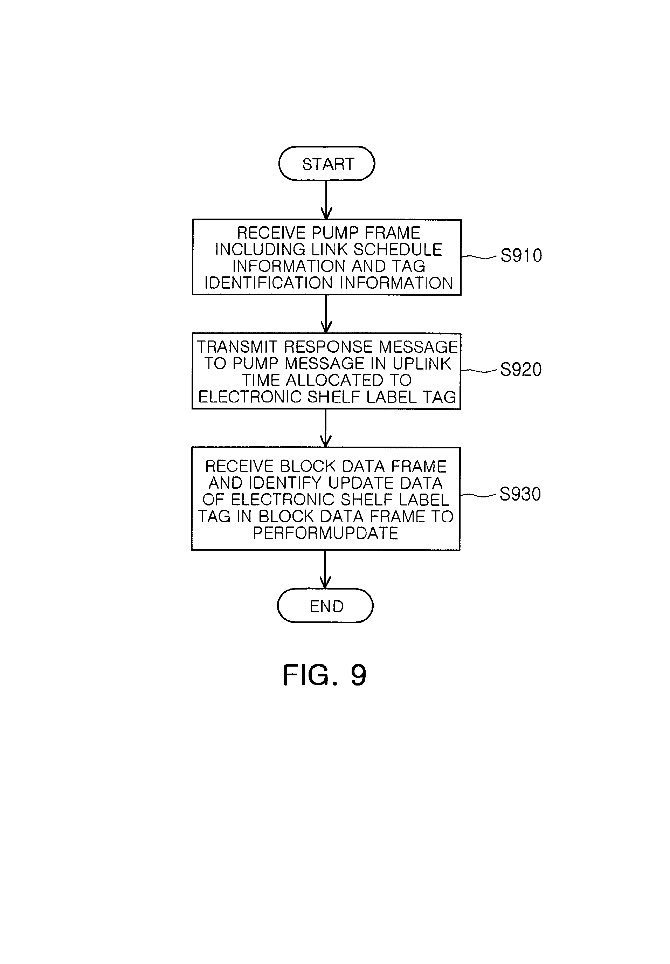

A method of operating an electronic shelf label system performed by each component will be described in more detail with reference to FIGS. 8 and 9.

FIG. 8 is a schematic flow chart for explaining a method of operating an electronic shelf label system performed by the gateway according to the embodiment of the present invention; and FIG. 9 is a schematic flow chart for explaining a method of operating an electronic shelf label system performed by the electronic shelf label tag according to the embodiment of the present invention.

Since a method of operating an electronic shelf label system to be described below with reference to FIGS. 8 and 9 is performed by the gateway and the electronic shelf label tag described above with reference to FIGS. 1 through 6, descriptions of contents overlapped with the above-mentioned content will be omitted. However, those skilled in the art may clearly understand a method of operating an electronic shelf label system to be described below based on the above-mentioned description.

Referring to FIG. 8, the gateway 200 may determine a tag group to which the update data is to be transmitted (S810) and transmit the PUMP frame including the link schedule information and the tag identification information to the tag group (S820).

Then, when the gateway 200 receives the response message from at least one electronic shelf label tag belonging to the tag group, it may transmit the block data frame including the update data on the corresponding tag group (S830).

Here, the tag group may include at least one electronic shelf label tag, and the tag identification information may include group information indicating that the plurality of electronic shelf label tags are classified as being at least one group and sub-group information indicating that at least one group is classified as having at least one sub-group, as described above.

In the embodiment of the present invention, the gateway 200 may allocate the group information and the sub-group information to the electronic shelf label tags.

In an example of S830, the gateway 200 may determine the uplink time and the downlink time for at least one sub-group included in the tag group to generate the link schedule information and generate the PUMP message including the group identification information regarding the tag group and the sub-group and the link schedule information.

In the example of S830, the gateway 200 may identify a first group or a first sub-group to which at least one electronic shelf label tag transmitting the response message to the PUMP frame belongs and determine whether the identified first group or the first sub-group correspond to a group or a sub-group included in the link schedule information.

In the example of S830, the gateway 200 may integrate the update data on at least one electronic shelf label tag belonging to the first sub-group when at least one electronic shelf label tag suitably transmits the response message, thereby generating the block message frame.

Referring to FIG. 9, the electronic shelf label tag 300 may receive the PUMP frame including the link schedule information and the tag identification information from the gateway 200 (S910) and transmit the response message to the PUMP message in the uplink time allocated thereto using the tag identification information and the link schedule information (S920).

Then, when the electronic shelf label tag 300 receives the block data frame from the gateway 200, it may identify its update data from the received block data frame to perform the update.

In an example of S920, the electronic shelf label tag 300 may determine the uplink time allocated to the group or the sub-group to which it belongs and provide the response message to the PUMP message when the current time is included in the uplink time.

In another example of S920, the electronic shelf label tag 300 may be maintained in the sleep state for a remaining time until the uplink time when the current time is not included in the uplink time and provide the response message to the PUMP message when the sleep state ends.

As set forth above, according to the embodiments of the present invention, the PUMP frame is used, whereby the update of the electronic shelf label tag may be stably managed even in one wireless communications channel. Therefore, the number of wireless communications modules required in the gateway and the electronic shelf label tag may be decreased.

While the present invention has been shown and described in connection with the embodiments, it will be apparent to those skilled in the art that modifications and variations can be made without departing from the spirit and scope of the invention as defined by the appended claims.

## Claims

1. A method of operating an electronic shelf label system performed by a gateway providing update data provided from an electronic shelf label server to a plurality of electronic shelf label tags through wireless communications, the method comprising:
determining a tag group to which the update data is to be transmitted;
transmitting a price update multi-poll (PUMP) frame including link schedule information and tag identification information regarding the tag group; and
transmitting a block data frame including the update data on the tag group when a response message is received from at least one electronic shelf label tag belonging to the tag group,
wherein the tag group includes the at least one electronic shelf label tag among the plurality of electronic shelf label tags.

2. The method of claim 1, wherein the tag identification information includes:
group information indicating that the plurality of electronic shelf label tags are classified as being at least one group; and
sub-group information indicating that the at least one group is classified as having at least one sub-group.

3. The method of claim 2, further comprising allocating the group information and the sub-group information to the plurality of electronic shelf label tags.

4. The method of claim 2, wherein the transmitting of the PUMP frame includes:
determining an uplink time or a downlink time for the at least one sub-group included in the tag group to generate the link schedule information; and
generating a PUMP message including group identification information regarding the tag group and the sub-group and the link schedule information.

5. The method of claim 2 or 4, wherein the determining of the tag group includes:
identifying a first group or a first sub-group allocated to the at least one electronic shelf label tag transmitting the response message to the PUMP frame; and
determining whether the identified first group or first sub-group corresponds to a group and a sub-group included in the link scheduling information.

6. The method of claim 5, wherein the transmitting of the block data frame includes integrating the update data on at least one electronic shelf label tag belonging to the first sub-group when the at least one electronic shelf label tag suitably transmits the response message, thereby generating the block message frame.

7. A method of operating an electronic shelf label system performed by electronic shelf label tags matched with a gateway in a ratio of 1 to N and updating update data from the gateway through wireless communications, the method comprising:
receiving a PUMP frame including link schedule information and tag identification information from the gateway;
transmitting a response message to a PUMP message in an uplink time allocated to the electronic shelf label tags using the tag identification information and the link schedule information; and
identifying update data of the electronic shelf label tags in a received block data frame when the block data frame is received from the gateway, thereby performing an update.

8. The method of claim 7, wherein the tag identification information includes:
group information indicating that a plurality of electronic shelf label tags are classified as being at least one group; and
sub-group information indicating that the at least one group is classified as having at least one sub-group.

9. The method of claim 8, wherein the transmitting of the response message includes:
determining the uplink time allocated to a group or a sub-group to which the electronic shelf label tags belong; and
transmitting the response message to the PUMP message when a current time is included in the uplink time.

10. The method of claim 9, wherein the transmitting of the response message further includes:
maintaining the electronic shelf label tags in a sleep state for a remaining time until the uplink time when the current time is not included in the uplink time; and
transmitting the response message to the PUMP message when the sleep state ends.

11. An electronic shelf label system comprising:
a gateway providing update data provided from an electronic shelf label server to a plurality of electronic shelf label tags; and
the plurality of electronic shelf label tags,
wherein the gateway transmits a PUMP frame including link schedule information and tag identification information to the plurality of electronic shelf label tags and transmits a block data frame in which the update data of one electronic shelf label tag transmitting a response frame to the PUMP frame is grouped, and
the plurality of electronic shelf label tags receive the PUMP frame and then transmit the response frame in uplink times allocated thereto, and identify their update data when they receive the block data frame, thereby performing an update.

12. The electronic shelf label system of claim 11, wherein the gateway transmits the PUMP frame and the block data frame to the plurality of electronic shelf label tags using one wireless communications channel.

13. The electronic shelf label system of claim 11, wherein the tag identification information includes:
group information indicating that the plurality of electronic shelf label tags are classified as being at least one group; and
sub-group information indicating that the at least one group is classified as having at least one sub-group,
wherein the link schedule information includes an uplink time or a downlink time determined for each sub-group.

14. The electronic shelf label system of claim 13, wherein the gateway includes:
an update data storage unit storing the update data on the plurality of electronic shelf label tags;
a PUMP management unit generating the PUMP frame including the link schedule information and the tag identification information for each group or sub-group of the electronic shelf label tags; and
a block data frame generation unit integrating the update data for each group of the electronic shelf label tags to generate the block data frame.

15. The electronic shelf label system of claim 13, wherein each of the electronic shelf label tags includes:
a tag control unit determining the uplink time allocated to the electronic shelf label tag using the PUMP frame and controlling the response message to the PUMP frame to be transmitted in the determined uplink time; and
an update management unit identifying the update data of the electronic shelf label tag in the block data frame using the group information or the sub-group information to perform an update.
